# EUROPEAN PATENT SPECIFICATION

(11) **EP 0 529 935 B1**
(45) Date of publication and mention of the grant of the patent: **15.05.1996**
(21) Application number: 92307594.9
(22) Date of filing: 19.08.1992
(51) Int. Cl.: F16C 5/00, F02B 75/32

(54) **Four-stroke cycle trunk piston type diesel engine**
Diesel-Viertaktmotor
Moteur Diesel à quatre temps

(30) Priority: 29.08.1991 JP 218587/91
(43) Date of publication of application: 03.03.1993
(73) Proprietor: THE HANSHIN DIESEL WORKS, LTD., Kobe, Hyogo 650 (JP)
(72) Inventor: Nakano, Hideaki, Okubo-cho, Akashi, Hyogo 674 (JP)
(74) Representative: Rackham, Anthony Charles

(56) References cited:
- DE-A- 2 620 910
- DE-C- 577 389
- DE-U- 9 003 721
- US-A- 2 057 158
- US-A- 2 410 565
- "Bau und Berechnung von Verbrennungsmotoren" 1983
- "Verbrennungsmotoren Band 1" 1990
- "Kräfte, Momente und deren Ausgleich in der Verbrennungskraftmaschine" 1981
- "Motoren Technik Praxis Geschichte" 1982
- "Gestaltungen und Hauptabmessungen der Verbrennunskraftmaschine" 1979
- Forscher Bericht VDI "Entwicklungsaspekte bei Grossdieselmotoren" 1985
- "The Motor Ship" Feb 1993

## Description

The present invention relates to a low-revolution, long-stroke, four-stroke cycle diesel engine of the trunk piston type suitable for use in marine applications.

The diesel engines currently used for marine applications can be generally classified into two types according to the type of the connection between the piston and the crankshaft. The two types are the trunk piston type and cross-head type.

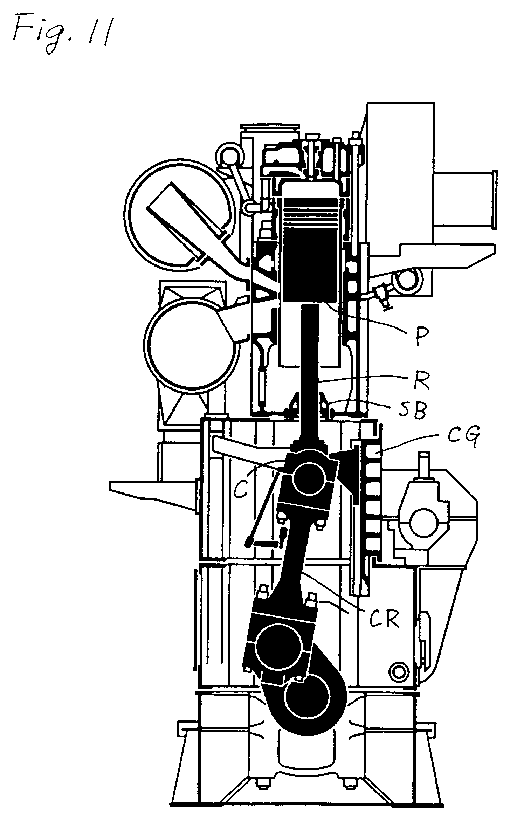

Fig. 11 of the accompanying drawings shows a conventional two-stroke cycle diesel engine of the crosshead type, in which the cylinder and crankcase are isolated by a stuffing box SB. The small end of connecting rod CR is connected to a crosshead C which reciprocates along a crosshead guide CG in the crankcase. The crosshead is connected via a rod R to the piston P. The provision of a crosshead makes it mechanically easy to lengthen the piston stroke. Currently, long-stroke crosshead type diesel engines having a stroke-to-bore (S/D) ratio of approximately 3.8 are being practically used. However, this type engine has a complicated construction and is costly because it requires a stuffing box, an auxiliary blower for scavenging, etc.

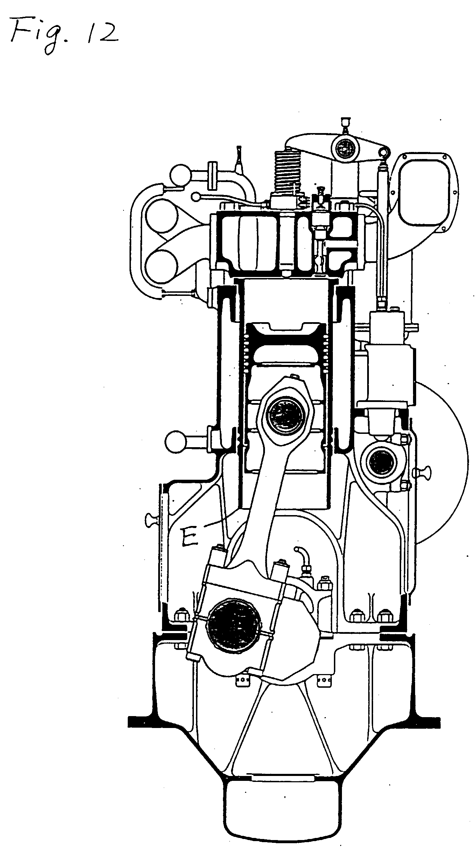

Fig. 12 of the drawings shows a conventional four-stroke cycle diesel engine of the trunk piston type, in which the small end of the connecting rod is connected directly to the piston. This type engine can generally have a lower overall height than a crosshead type diesel engine of the same output. The lower height decreases the dead space on board the ship and increases the available capacity.

In recent years, in order to improve the propulsion efficiency of a ship propeller, there has been a trend toward a marked reduction in the propeller revolution as compared with what was previously used. Accordingly, main engines for marine applications are required to have a low rated revolution. In order to respond to this requirement without decreasing engine output, it is necessary to lengthen the piston stroke.

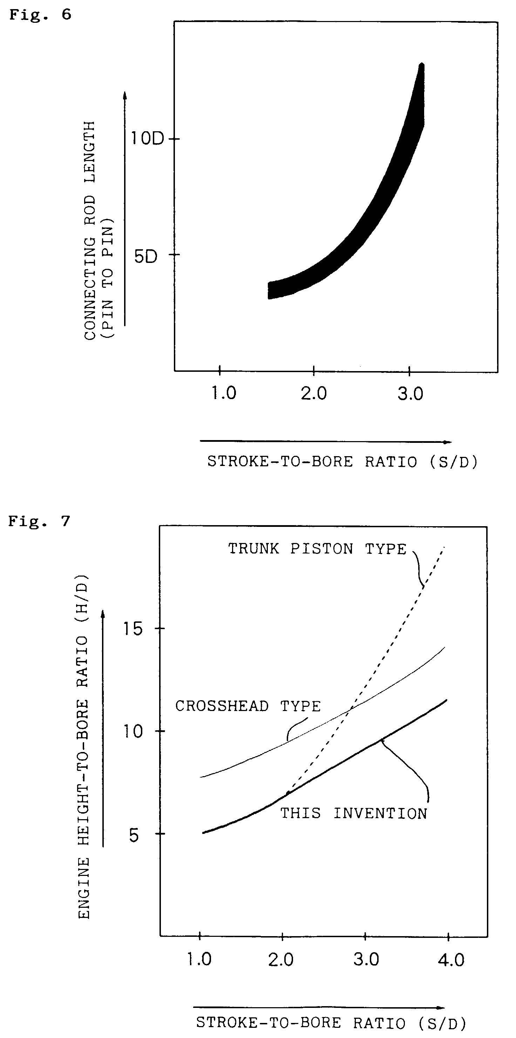

Trunk piston type diesel engines are limited for constructional reasons to a stroke-to-bore (S/D) ratio of about 2.0 in practice. In the case of this type engine, it is necessary to avoid the interference of the lower end (E in Fig. 12) of the cylinder liner with the connecting rod when the rod inclines. Therefore, if the S/D ratio increases, the rod must be lengthened to avoid the interference. As pointed out by G. Wolf and other researchers noted in this field, if an attempt is made to increase the S/D ratio (lengthen the stroke) of a trunk piston type diesel engine, as shown in Fig. 6, the connecting rod will be long on a quadratic curve with respect to the S/D ratio.

As shown in Fig. 7, when the S/D ratio increases past the point of approximately 2.5, the overall engine height for the trunk piston type becomes greater than even that of the crosshead type, thus eliminating the features and advantages of the trunk piston type diesel engine.

Furthermore, the cross-sectional area of the connecting rod must be greatly enlarged to increase the buckling strength. This results in an increase in the overall length of the engine, and in increases in the engine size (external dimensions) and weight, which represent a drop in operating economy.

For these reasons, in order to satisfy the above requirements, a trunk piston type diesel engine, which has an S/D ratio of only 2.0 or less, is currently required to be connected with an expensive and heavy speed reduction gear.

DE-A-577389 shows an engine which is probably of the crosshead type. It has an upper piston sliding in a cylinder to form the combustion chamber with a lower part-cylindrical guide sliding in the lower part of the cylinder. It suffers the problems noted above.

It is therefore an object of this invention to provide a long stroke four-stroke cycle trunk piston type diesel engine having a low overall height and a low rated revolution which can be used without a reduction gear.

According to the invention there is provided a four-stroke trunk piston type diesel engine having a stroke-to-bore ratio of at least 2.5, comprising:
a cylinder having an upper portion and a lower portion of the same diameter,
an upper piston reciprocatable inside the cylinder portion and forming a combustion chamber therewith,
a lower piston spaced from the upper piston by a space and connected thereto to reciprocate therewith inside the lower cylinder portion and part of the upper cylinder portion, and the length of the lower piston plus the space between the upper and lower pistons being a least equal to the cylinder bore,
a rod connecting the lower piston to the crankshaft, and
the lower cylinder portion having a length substantially equal to the length of the lower piston plus the length of the space between the upper and lower pistons, and having recesses formed axially therealong on both sides to avoid interference with the rod.

Such an engine is simple, cheap and excellent in low load operation, load adaptability and fuel consumption. It can also have a low overall height and a lower rated revolution.

Although the recesses reduce the area of the lower cylinder portion on which the side thrust force is exerted, because the force is markedly low on this area, the force per unit area does not increase substantially. This results in high reliability despite the recesses formed.

Preferred embodiments of the invention are shown in the accompanying drawings, wherein:
Fig. 1a is a schematic view partially in axial section of main parts of an engine according to one embodiment;
Fig. 1b is a sectional view taken along line 1b-1b of Fig. 1a;
Figs. 2 and 3 are views similar to Fig. 1a, but showing some parts in different positions;
Fig. 4a is a perspective view of parts of an engine according to another embodiment;
Fig. 4b is a sectional view taken along lines 4b-4b of Fig. 4a;
Fig. 5a is a perspective view of parts of an engine according to a further embodiment;
Fig. 5b is an elevational view of parts of the engine shown in Fig. 5a;
Fig. 5c is a sectional view taken along line 5c-5c of 5a;
Fig. 6 is a graph showing the relationship between the length of the connecting rod divided by the bore and the stroke-to-bore ratio of a trunk piston type diesel engine;
Fig. 7 is a graph showing the relationships between the engine height-to-bore ratios and the stroke-to-bore ratios of trunk piston type and crosshead type diesel engines and the present invention;
Fig. 8 is a graph showing the relationships between the ratios of various sizes shown in Fig. 3 and the stroke-to-bore ratio;
Fig. 9 is a graph showing the relationship between the side thrust force on the cylinder and the crank angle in the expansion stroke of a slow revolution speed trunk piston type diesel engine;
Fig. 10a is a view similar to Fig. 1a, but showing a further embodiment;
Fig. 10b is a sectional view taken along line 10b-10b of Fig. 10a;
Fig. 10c is a sectional view taken along line 10c-10c of Fig. 10b;
Fig. 11 is a sectional view of a prior art two-stroke cycle crosshead type diesel engine;
Fig. 12 is a sectional view of a prior art four-stroke cycle trunk piston type diesel engine;

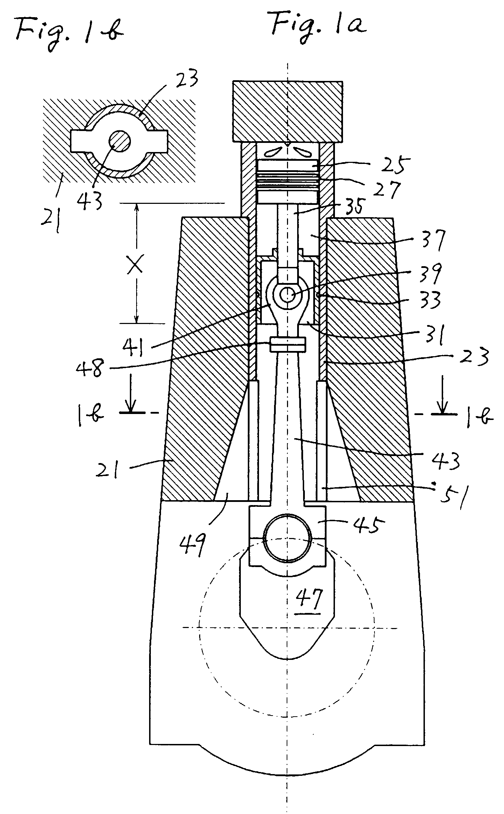

With reference to Figs. 1a, 1b, 2 and 3, the engine includes a cylinder 21, a cylinder liner 23, an upper piston 25 having compression rings 27 and oil scraper rings (not shown) beneath them, and a lower piston 31 having oil scraper rings (not shown) and an annular oil groove 33 beneath them.

The upper piston 25 is fixed to a rod 35, which extends loosely through the top of lower piston 31 and is fixed to a piston pin 39. The lower piston 31 is supported rotatably on the pin 39, with a space 37 formed between the pistons. The pin 39 is connected to the small end 41 of a connecting rod 43, the large end 45 of which is connected to a crankshaft 47.

The rotatable connection of lower piston 31 reduces the mutual deforming effect between the pistons. The rod 35 and space 37 construction reduces the mutual deforming effect due to thermal and mechanical stresses between the pistons 25 and 31.

In order to reduce the height required to remove the pistons when overhauling the engine, the rod 43 is connected to the pin 39 via a flange 48 so as to be disassembled.

The cylinder 21 and liner 23 are longer than those of a conventional trunk piston type diesel engine by at least the length X between the bottoms of pistons 25 and 31.

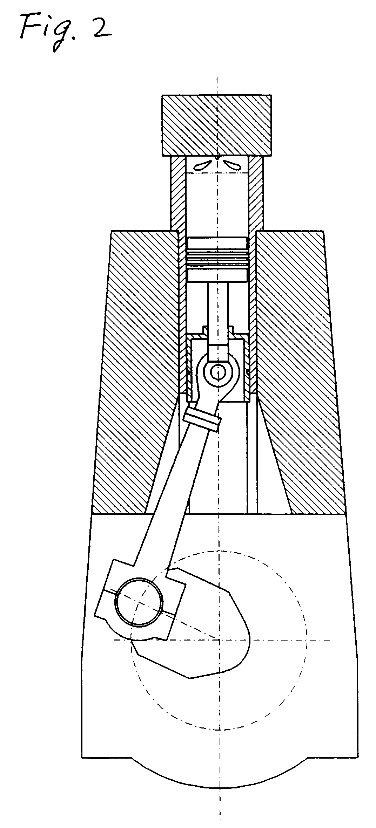

A bottom portion of cylinder 21 has triangular recesses 49 formed in it on both sides. The corresponding bottom portion of liner 23 has slits 51 formed through it, which are aligned with and have the same height as the recesses 49. The recesses 49 and slits 51 are slightly wider than the thickness of rod 43, which does consequently not interfere with the cylinder 21 and liner 23 when it inclines as shown in Fig. 2.

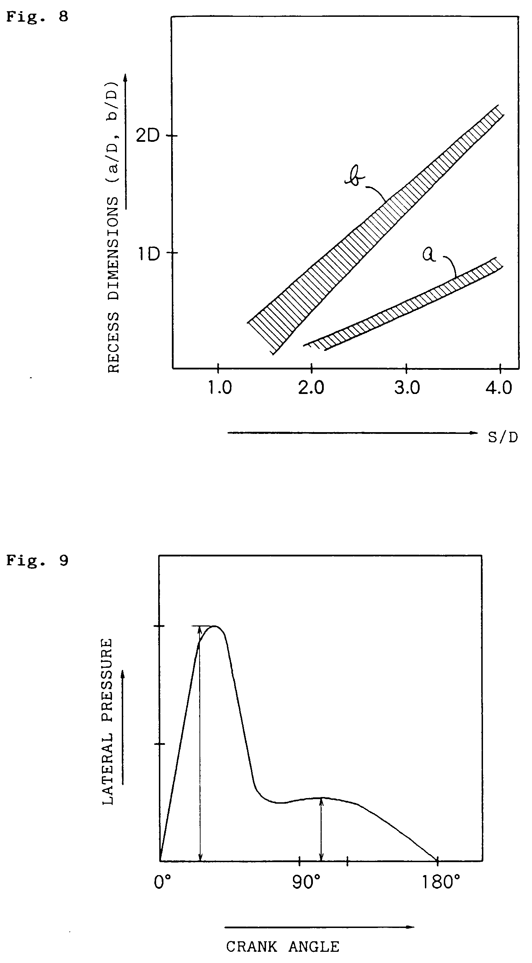

In these bottom portions, the side thrust force exerted by the lower piston 31 upon the liner 23 decreases markedly, when the crank angle ranges substantially from 70 to 180 degrees (Fig. 9) in the expansion stroke and from 540 to 650 degrees in the compression stroke.

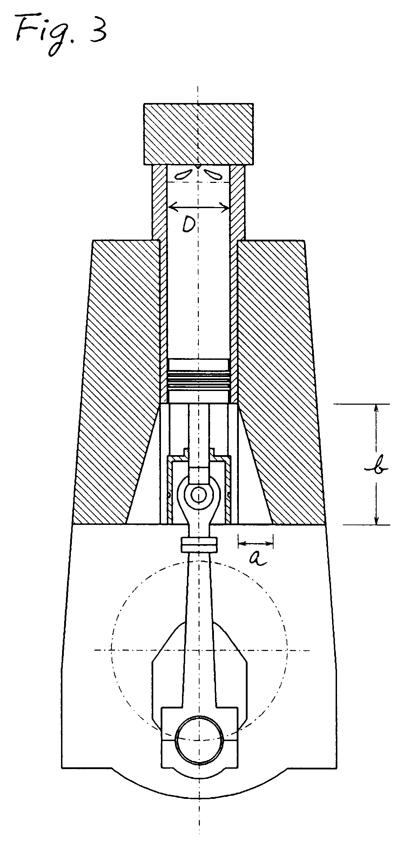

Fig. 8 shows the relationships between the stroke-to-bore ratio S/D and the ratios of the maximum depth a and length b (Fig. 3) of triangular recesses 49 to the bore D. The length b equals the length X (Fig. 1a), and nearly equals the cylinder bore D when the S/D ratio is 2.5.

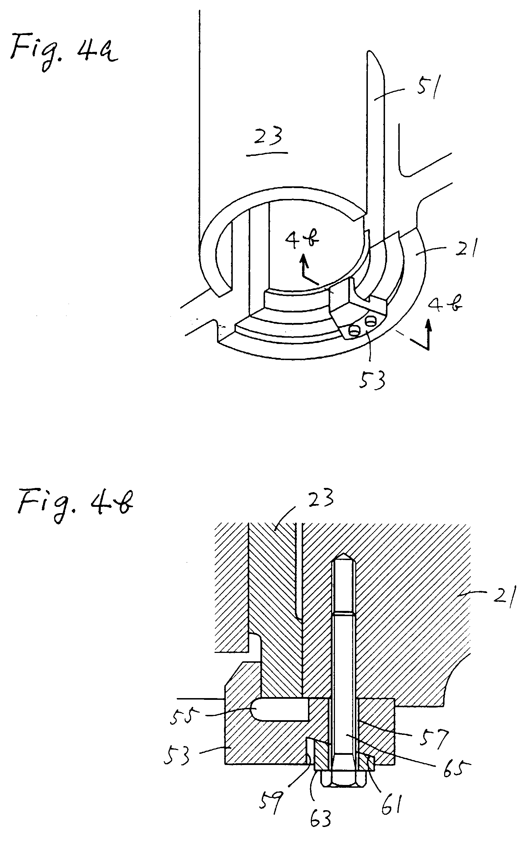

As shown in Figs. 4a and 4b, the bottom of liner 23 may be tightly fixed to the cylinder 21 by clamps 53 (only one shown), thus compensating for the drop in strength resulting from the formation of slits 51.

Each clamp 53 has an upper recess 55 to form a clearance between it and the bottom of liner 23 to accommodate with the thermal expansion of liner 23.

Each clamp 53 has bolt holes 57 each terminating in an enlarged bottom 59, which is shallower outwardly to form an inclined surface 61 for engaging with a tapered washer 63. A bolt 65 passes through the washer 63 and clamp 53 and is threaded into the cylinder 21. Because the bolt 65 has a diameter smaller than the hole 57, the clamp 53 and liner 23 are biased toward the cylinder 21.

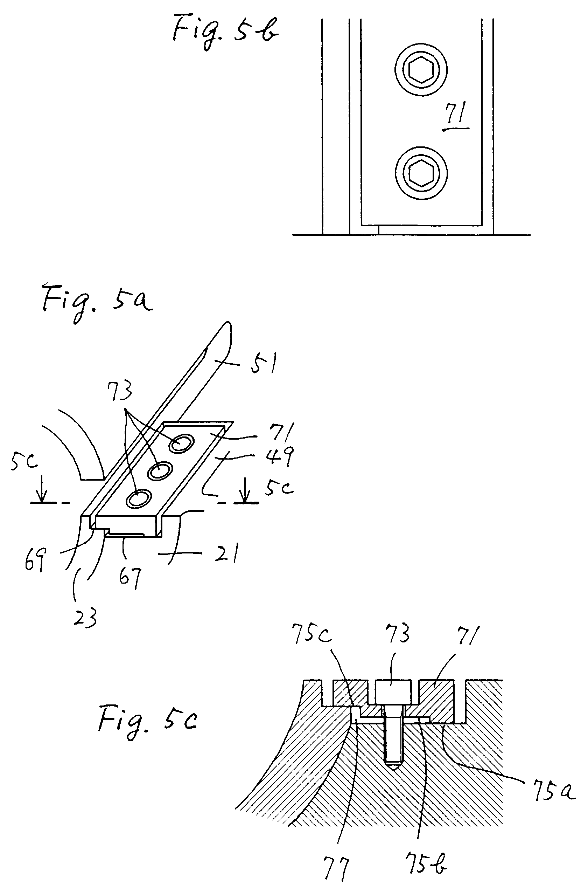

Figs. 5a-5c show another form of clamping, in which the cylinder 21 and liner 23 have corresponding recesses 67 and 69 on both sides (only one side shown as having recesses in Fig. 5a) of each triangular recess 49 and slit 51. A clamp 71 is fixed to the cylinder 21 by bolts 73 in the recesses 67 and 69 to hold the side faces of slit 51 and triangular recess 49 in flush alignment.

The liner recess 69 is shallower than the cylinder recess 67. The back side of clamp 71 has three steps 75a-75c. The outer steps 75a and 75c engage respectively with the recesses 67 and 69, forming a clearance 77 between the clamp 71 and cylinder 21. By tightening the bolts 73 into the cylinder 21, the clamp 71 compresses the liner 23, thus accommodating with the thermal expansion.

In operation, the pistons 25 and 31 move together from the top dead center position in the compression state shown in Fig. 1a, through a middle position in the expansion state shown in Fig. 2, to the bottom dead center position shown in Fig. 3.

Because the pistons 25 and 31 reciprocate with their strokes partially overlapping, the cylinder 21 and liner 23 are shortened with respect to the strokes. As shown in Fig. 2, the triangular cylinder recesses 49 and liner slits 51 prevent the rod 43 from interfering with the cylinder and liner, even if the rod 43 is shortened and its angle of inclination to the cylinder axis is increased.

As a resuslt, as shown in Fig. 7, even if a long stroke is used, it is possible to reduce the overall engine height, thus providing a long-stroke (S/D ratio of approximately 4) diesel engine without losing the features inherent to prior art trunk piston type diesel engines.

Even if the compression rings 27 on the upper piston are damaged and some of the combustion gas leaks from the combustion chamber, the leaking gas will first enter and expand in the space 37 between the pistons before it enters the crankcase. This prevents accidental explosion of the engine resulting from flame blowby, which occured in the past.

The upper piston 25 is lubricated by a cylinder lubricator (not shown). Some of the oil supplied via a passage (not shown) in the rod 43 for cooling (lubricating) the upper piston 25 is supplied through the oil groove 33 in the lower piston 31, thus lubricating the cylindrical side of lower piston 31.

Because the oil which lubricates the lower piston 31 is prevented from rising up into the combustion chamber by the oil scraper rings on the lower piston and the space 37, and also by the oil scraper rings on the upper piston, even though ample lubrication of the lower piston is provided, there is no chance of excessive consumption of lubricating oil occurring.

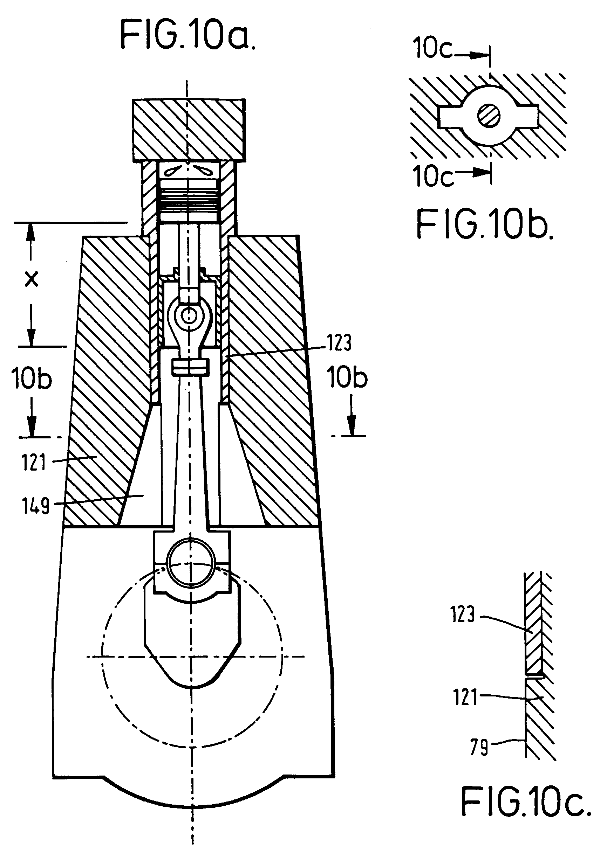

Figs. 10a-10c show a further embodiment of the invention, wherein the cylinder liner 123 does not have a bottom portion corresponding to that with slits 51 in Figs. 1a-3. This liner portion is replaced by a reduced bore 79 of cylinder 121, where triangular recesses 149 are formed.

## Claims

1. A four-stroke trunk piston type diesel engine having a stroke-to-bore ratio of at least 2.5, comprising:
a cylinder (21) having an upper portion and a lower portion of the same diameter,
an upper piston (25) reciprocatable inside the cylinder portion and forming a combustion chamber therewith,
a lower piston (31) spaced from the upper piston (25) by a space (37) and connected thereto to reciprocate therewith inside the lower cylinder portion and part of the upper cylinder portion, and the length of the lower piston plus the space (37) between the upper and lower pistons (25, 31) being a least equal to the cylinder bore,
a rod (43) connecting the lower piston (31) to the crankshaft (47), and
the lower cylinder portion having a length substantially equal to the length of the lower piston plus the length of the space (37) between the upper and lower pistons (25, 31), and having recesses (49) formed axially therealong on both sides to avoid interference with the rod (43).

2. An engine as claimed in Claim 1 and further comprising a liner (23) inside the cylinder (21), the liner (23) having slits aligned with the cylinder recesses (49).

3. An engine as claimed in Claim 2 and further comprising a clamp (53) engaging with the bottoms of the cylinder (21) and liner (23) to fix them together.

4. An engine as claimed in Claim 1 and further comprising a liner inside the upper cylinder portion and flush with the lower cylinder portion.

## Patentansprüche

1. Vier-Takt-Hohlkolbendieselmotor mit einem Hub-Bohrungsverhältnis von mindestens 2,5, aufweisend:
einen Zylinder (21) mit einem oberen Bereich und einem unteren Bereich vom gleichen Durchmesser,
einen oberen Kolben (25), der sich im Inneren des Zylinderbereichs hin- und herbewegen kann und damit eine Verbrennungskammer bildet,
einen unteren Kolben (31), der von dem oberen Kolben (25) durch einen Raum (37) getrennt ist, und mit diesem verbunden ist, um sich mit ihm hin- und herzubewegen im Inneren des unteren Zylinderbereichs und teilweise des oberen Zylinderbereichs, und wobei die Länge des unteren Kolbens zuzüglich des Raumes (37) zwischen dem oberen und unteren Kolben (25, 31) zumindest gleich der Zylinderbohrung ist,
und eine Pleuelstange (43), die den unteren Kolben (31) mit der Kurbelwelle (47) verbindet und
den unteren Zylinderbereich, der eine Länge aufweist, die im wesentlichen gleich der Länge des unteren Kolbens zuzüglich der Länge des Raumes (37) zwischen dem oberen und
unterem Kolben (25, 31) ist, und der Aussparungen (49) aufweist, die axial an diesem auf beiden Seiten gebildet sind, um eine Beeinflussung mit der Pleuelstange (43) zu vermeiden.

2. Motor nach Anspruch 1,
weiterhin aufweisend eine Führung (23) im Inneren des Zylinders (21), wobei die Führung (23) Schlitze aufweist, die mit den Zylinderaussparungen (49) ausgerichtet sind.

3. Motor nach Anspruch 2,
weiterhin aufweisend eine Halterung (53), die mit den Böden des Zylinders (21) und der Führung (23) in Eingriff kommt, um sie zusammenzuhalten.

4. Motor nach Anspruch 1,
weiterhin aufweisend eine Führung im Inneren des oberen Zylinderbereichs und bündig mit dem unteren Zylinderbereich.

## Revendications

1. Moteur diesel à quatre temps de type à piston fourreau, ayant un rapport course/alésage d'au moins 2,5, comprenant :
un cylindre (21) ayant une partie supérieure et une partie inférieure du même diamètre,
un piston supérieur (25) déplaçable en va-et-vient dans la partie formant cylindre et formant une chambre de combustion conjointement avec ce dernier,
un piston inférieur (31) espacé du piston supérieur (25) d'un espace (37) et connecté à ce dernier pour se déplacer en va-et-vient conjointement avec ce dernier dans la partie formant cylindre inférieur et une partie du cylindre supérieur, et la longueur du piston inférieur plus l'espace (37) entre les pistons supérieur et inférieur (25, 31) étant au moins égale à l'alésage de cylindre,
une tige (43) connectant le piston inférieur (31) au vilebrequin (47), et la partie formant cylindre inférieur ayant une longueur sensiblement égale à la longueur du piston inférieur plus la longueur de l'espace (37) entre les pistons supérieur et inférieur (25, 31), et ayant des cavités (49) formées axialement tout le long des deux côtés, pour éviter toute interférence avec la tige (43)

2. Moteur selon la revendication 1, et comprenant en outre un revêtement (23) dans le (21), le revêtement (23) ayant des fentes alignées avec les cavités de cylindre (49).

3. Moteur selon la revendication 1, et comprenant en outre un élément de serrage (53) s'engageant contre les parties de fond du cylindre (21) et le revêtement (23), pour les fixer ensemble.

4. Moteur selon la revendication 1, et comprenant en outre un revêtement dans la partie formant cylindre supérieur, affleuré avec la partie formant cylindre inférieur.
